# EUROPÄISCHE PATENTSCHRIFT

(11) **EP 0 666 425 B1**
(45) Veröffentlichungstag und Bekanntmachung des Hinweises auf die Patenterteilung: **28.04.1999**
(21) Anmeldenummer: 95100089.2
(22) Anmeldetag: 04.01.1995
(51) Int. Cl.: F16B 7/04, E04B 2/76, E04B 2/78, F16B 12/20

(54) **Profilverbindung von Tragprofilen**
Connection for support profiles
Assemblage de supports profilés

(30) Priorität: 05.01.1994 DE 9400107 U; 22.09.1994 DE 9415356 U
(43) Veröffentlichungstag der Anmeldung: 09.08.1995
(73) Patentinhaber: Schnaithmann Maschinenbau GmbH, D-73630 Remshalden (DE)
(72) Erfinder: Schnaithmann, Karl, D-71404 Korb 2 (DE)
(74) Vertreter: Wasmuth, Rolf, Dipl.-Ing.

(56) Entgegenhaltungen:
- DE-A- 2 250 216
- DE-U- 9 301 112
- Umformtechnik, Band 2: Massivumformung, Springer-Verlag, Berlin, Heidelberg, New-York, London, Paris, Tokio, 1988, Seite 403
- Prospekt der Firma Kanya AG, Schweiz, Ausgabe 1991, Seite A4.2

## Beschreibung

Die Erfindung betrifft eine Profilverbindung zwischen einem ersten Tragprofil und einem stirnseitig angrenzenden Tragprofil zum Bau von Stützrahmen, Wandelementen, Regalen oder dgl., nach dem Oberbegriff des Anspruches 1 und ein Tragprofil nach dem Oberbegriff des Anspruches 9.

Derartige Profilverbindungen sind aus der DE-A 2 250 216 und dem DE-U 9 301 112 bekannt und weisen insbesondere als Aluminiumstrangprofile gefertigte Tragprofile auf, welche als Stützelemente für Unterbauten, Stützrahmen in Fertigungsstraßen, Wandelementen usw., verwendet werden. Diese Tragprofile sind hoch belastbar, können mit minimalem Materialaufwand gefertigt werden und sind flexibel anwendbar. Sie weisen in der Regel einen rechteckförmigen oder quadratischen Querschnitt auf; an ihren Außenseiten sind in Profillängsrichtung verlaufende, nach außen offene, hinterschnittene Profilnuten eingelassen, in die Verbindungselemente eingesetzt werden können, um stirnseitig angrenzende Tragprofile kraftübertragend anschließen zu können. Dabei besteht das Problem, daß sich Schmutzteilchen unterschiedlicher Größe in der Profilnut, insbesondere im Bereich der Verbindung, ablagern und auch im Innenraum des stirnseitig angrenzenden Tragprofils ablagern können, so daß eine derartige Profilverbindung in Branchen mit erhöhten hygienischen Anforderungen, z.B. in der Lebensmittelbranche, nicht ohne weitere Maßnahmen eingesetzt werden kann. Zum Schutz vor Verschmutzung wird die Profilnut oft mit einer Abdeckleiste oder einer Abdeckfolie verschlossen, wobei immer die Gefahr besteht, daß sich in Randfugen oder Ritzen Mikropartikel oder Keime absetzen, so daß die hohen hygienischen Anforderungen oftmals nicht erfüllt werden können. Das Anbringen einer Leiste oder Folie ist mit einem zusätzlichen Montageaufwand verbunden, und es besteht die Gefahr, daß durch Krafteinwirkung, Alterung oder Feuchtigkeit die Leiste bzw. Folie gelöst wird, so daß Ablagerungen in den Profilnuten nicht verhindert werden können.

Sind an allen Außenseiten des Tragprofils Profilnuten zur Herstellung von Verbindungen eingesetzt, ist das Widerstandsmoment des Tragprofils herabgesetzt und zur Erzielung einer ausreichenden Verwindungs- und Biegesteifigkeit muß ein vergrößerter Querschnitt des Tragprofils oder eine größere Wandstärke vorgesehen werden, wodurch das Tragprofil in der Herstellung verteuert und schwerer gemacht wird, was einer einfachen Handhabung entgegensteht. Dadurch können derartige Tragprofile nur eine begrenzte Anzahl von Verbindungen aufnehmen, da die von den Verbindungselementen verursachten Zug-, Druck- und Biegebelastungen zu lokalen Spannungsspitzen im Verbindungsbereich und einem Belastungsbruch führen können.

Es wurde daher auch schon vorgeschlagen, die Profilnuten nur auf ausgewählten Außenseiten des Tragprofils vorzusehen (Prospekt Kanya AG, Schweiz, Ausgabe 91, Seite A4.2). Dann aber ist je nach Einsatzfall (Eckprofil, Zwischenprofil, Abschlußprofil) eine angepaßte Gestalt notwendig, was die Lagerhaltung erhöht und den Aufbau aufwendiger macht.

Der Erfindung liegt die Aufgabe zugrunde, eine gattungsgemäße Profilverbindung bzw. gattungsgemäßes Tragprofil dahingehend weiterzubilden, daß ein weitestgehend dichtes Abschließen eines stirnseitig angrenzenden Tragprofils an die Außenseite eines anderen Tragprofils ermöglicht ist, wobei die Verbindung mit nur geringem Montageaufwand herstellbar ist; die Tragprofile sollen zudem ein hohes Maß an Stabilität aufweisen und auch für das nachträgliche Anbringen von Verbindungen geeignet sein.

Diese Aufgabe wird bei einer gattungsgemäßen Profilverbindung mit den Merkmalen des Anspruches 1 und bei einem gattungsgemäßen Tragprofil mit den Merkmalen des Anspruches 9 gelöst.

Zwischen dem inneren, axial verlaufenden Stützkern, der dem Tragprofil eine besonders hohe Stabilität verleiht, und dem Tragprofil-Außenmantel erstrecken sich axiale Profilschenkel, die im Bereich der Außenseite des Tragprofils einander zugewandt sind und eine Hinterschneidung bilden. Die die Profilnut begrenzenden Profilschenkel sind im Bereich ihrer offenen Schenkelenden über den größten Teil der Profilnutlänge durch eine kraftübertragende und die Profilnut verschließende Abstützung miteinander verbunden. Die einteilig mit dem Tragprofil ausgebildete Abstützung ist lediglich mit Durchbrüchen versehen, die zum Einsetzen der Verbindungselemente dienen, wobei für ein dichtes Abschließen angrenzender Tragprofile die minimale Erstreckung der Durchbrüche, in der Regel die Durchbruchbreite, geringer ist als die Breite der Profilnut und zumindest gleich der minimalen Erstreckung des Verbindungskopfes. Hierdurch ist in jedem Fall gewährleistet, daß der Kopf des Verbindungselements direkt durch den Durchbruch in der Abstützung der Profilnut eingeführt werden kann und dennoch von der Hinterschneidung der Profilnut gehalten ist. Die Abstützung deckt die Profilnut nach außen ab und verhindert das Festsetzen von Keimen und kleinsten Schmutzpartikeln insbesondere auch im Bereich der Verbindung, wodurch derartige Profilverbindungen für den Einsatz in Branchen mit hohen hygienischen Anforderungen besonders geeignet sind.

Die kraftübertragende Abstützung gewährleistet die Aufnahme höherer Zug- und Druckkräfte im Durchbruchbereich der Verbindung, da auch bei einer großen Anzahl von Verbindungen die Profilnut größtenteils verschlossen bleibt und die Kräfte über die Abstützung etwa gleichmäßig über die Profilschenkel in das Tragprofil geleitet werden; die einteilig mit dem Tragprofil ausgebildete Abstützung erhöht zudem das Widerstandsmoment des Tragprofils, wodurch die Aufnahme höherer Biege- und Torsionskräfte gewährleistet ist.

In vorteilhafter Weiterbildung weisen die Durchbrüche Rechteckform auf, wobei die Durchbruch-Längsseiten vorzugsweise parallel zur Längsachse der Profilnut ausgerichtet sind. Ein vorteilhaft rechteckförmiger Verbindungskopf, der über einen in den Stützkern des stirnseitig angrenzenden Tragprofils einragenden Verbindungsstift gehalten ist, wird zur Herstellung der Profilverbindung in den Durchbruch eingesetzt und um einen bestimmten Winkelbetrag verdreht, so daß der Profilkopf von der Hinterschneidung der einander zugewandten Profilschenkel gehalten ist.

Der Stützkern des Tragprofils weist zweckmäßig einen axial verlaufenden Hohlraum auf, dessen Durchmesser kleiner ist als die Profilnutbreite, wodurch sichergestellt ist, daß der Hohlraumdurchmesser ebenfalls kleiner ist als die Länge des Durchbruchs und bei einer Verbindung aneinanderstoßender Tragprofile der Hohlraum des Stützkerns vor Verunreinigungen geschützt ist.

Die Abstützung der Profilnut liegt mit dem Außenmantel des Tragprofils vorzugsweise in einer Ebene, um eine glatte Außenseite ohne jegliche Vorsprünge oder Vertiefungen zu bilden, in die sich Schmutzteile absetzen könnten. Die Wandstärke der Abstützung kann etwas weniger dick als die angrenzenden Wandbereiche ausgebildet sein, was die Stabilität des Tragprofils nicht merklich beeinträchtigt und das Einbringen von Durchbrüchen erleichtert.

Weitere Merkmale der Erfindung sowie vorteilhafte Ausgestaltungen ergeben sich aus den weiteren Ansprüchen, der Beschreibung und den Zeichnungen, in denen Ausführungsbeispiele der Erfindung dargestellt sind. Es zeigen:
- Fig. 1: eine perspektivische Ansicht einer Profilverbindung zweier senkrecht aufeinanderstoßender Tragprofile,
- Fig. 2: die Profilverbindung nach Fig. 1 in Explosionsdarstellung,
- Fig. 3: einen Schnitt durch drei rechtwinklig angrenzende und verbundene Tragprofile,
- Fig. 4: einen Nutenstein zum Einsetzen in eine Profilnut,
- Fig. 5: einen Nutenstein in einer weiteren Ausführung,
- Fig. 6: einen in eine Profilnut eingesetzten Nutenstein,
- Fig. 7: einen Querschnitt durch ein Tragprofil,
- Fig. 8: einen Querschnitt im Bereich des Durchbruchs mit eingesetztem Verbindungselement,
- Fig. 9: einen Querschnitt durch ein Tragprofil in einer anderen Ausgestaltung,
- Fig. 10: einen Querschnitt durch ein Tragprofil mit zwei parallelen Stützkernen.

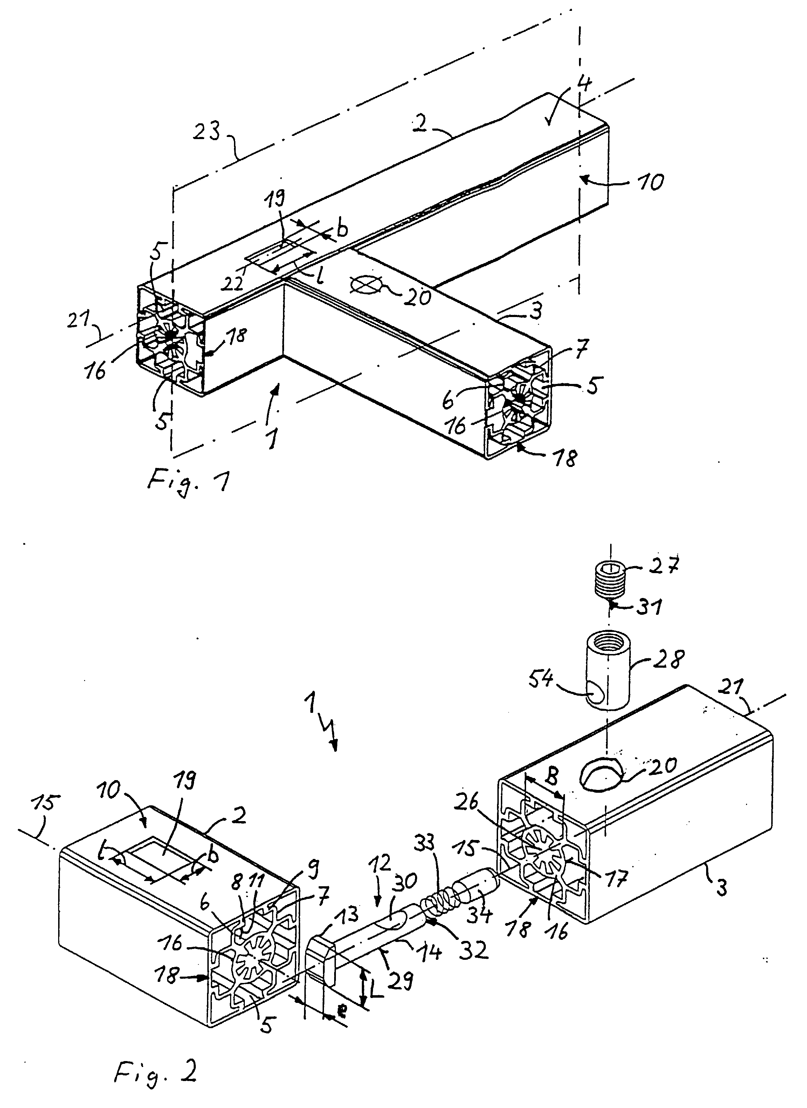

Fig. 1 zeigt eine Profilverbindung 1 zwischen einem Tragprofil 2 und einem stirnseitig angrenzenden Tragprofil 3, wobei die Profilverbindung im Bereich der Stirnseite des angrenzenden Tragprofils angeordnet ist und innerhalb der Stirnfläche des Tragprofils liegt, so daß die Verbindung nicht über die Außenseiten des stirnseitig angrenzenden Tragprofils hinausragt. Im Innenraum der Tragprofile 2, 3 ist jeweils ein Stützkern 16 angeordnet, zwischen dessen Mantelfläche 17 und dem Außenmantel 10 des Tragprofils zwei Profilschenkel 6, 7 angeordnet sind, die eine axial verlaufende Profilnut 5 mit Längsachse 21 bilden, siehe auch Fig. 2. Die Profilschenkel 6, 7 sind im Bereich des Außenmantels 10 einander zugewandt und bilden eine Hinterschneidung 11, die vorteilhaft zum Halten des Verbindungskopfes 13 eines Verbindungselements 12 genutzt werden kann. Die offenen Schenkelenden 8 und 9 der Profilschenkel 6 bzw. 7 sind erfindungsgemäß durch eine kraftübertragende Abstützung 18 miteinander verbunden, welche einteilig mit dem Tragprofil im Bereich des Außenmantels 10 ausgebildet ist. Die Abstützung 18, die sich zweckmäßig über die gesamte axiale Länge der Profilnut 5 erstreckt, weist Durchbrüche 19, 20 auf, die Rechteckform oder auch eine runde Querschnittsform aufweisen können. Die Durchbrüche 19, 20 können fertigungstechnisch ab Werk in das Tragprofil eingebracht sein; dies empfiehlt sich insbesondere bei Verwendung der Profile als Standard-Bauelemente, die in gleichmäßigen Abständen mit Verbindungen versehen sind.

Die Durchbrüche 19, 20 können aber auch vor Ort während der Montage mit geeignetem Werkzeug eingebracht werden, beispielsweise durch Fräsen, Bohren oder Einstanzen mittels eines Dorns mit vorgegebener Querschnittsweite; in jedem Fall ist durch die Abstützung 18 eine Stabilitätserhöhung des Tragprofils hinsichtlich Biege- und Torsionsmoment gegeben. Außerdem können im Bereich der Hinterschneidung 11 der Profilnut 5 erheblich höhere Zug- und Druckkräfte, die vom Verbindungselement 12 übertragen werden, aufgenommen werden, da die Kräfte durch die Abstützung 18 gleichmäßig auf die Profilschenkel 6, 7 übertragen werden und Spannungsspitzen vermieden sind.

Die Durchbrüche, in die ein Verbindungskopf 13 eingesetzt werden soll, weisen zweckmäßig Rechteckform auf, wobei die Durchbruch-Längsseiten vorzugsweise parallel zur Längsachse 21 der Profilnut 5 ausgerichtet sind. Die Durchbrüche 19 sind insbesondere symmetrisch zu den Außenkanten der Außenseite 4 angeordnet, so daß die Längsmittelachse 22 des Durchbruchs 19 in einer Längsmittelebene 23 liegt, die die Profilnut 5 symmetrisch teilt und in der auch die Längsachse 5 des Tragprofils liegt, Fig. 1.

Der Verbindungskopf 13 weist zweckmäßig wie der Durchbruch 19 eine rechteckige Querschnittsform auf, wobei die Länge 1 des Durchbruchs 19 gleich groß oder größer als die Erstreckung L der Verbindungskopf-Längsseite ist, siehe Fig. 2. Zugleich ist die Breite b des Durchbruchs geringer als die Breite B der Profilnut 5 und zumindest gleich der Breite e des Verbindungskopfes 13. Durch dieses Verhältnis der Erstreckungen von Durchbruch und Verbindungskopf ist ein einfaches Einsetzen des Verbindungskopfes 13 in die Profilnut 5 durch den Durchbruch 19 gewährleistet, ohne daß das Verbindungselement von der Stirnseite des Tragprofils entlang der Profilnut bis zur Verbindungsstelle eingeführt werden muß. Zur Herstellung der Verbindung wird der Verbindungskopf 13 von außen durch den Durchbruch 19 eingeführt, wobei die Längsseiten des Verbindungskopfs 13 parallel zu den Längsseiten des Durchbruchs 19 liegen. Da die Länge 1 des Durchbruchs 19 zumindest gleich der Länge L des Verbindungskopfs 13 ist, kann der Verbindungskopf rechtwinklig, gemessen zur Längsmittelachse 22 des Durchbruchs 19, eingeführt werden; anschließend wird der Verbindungskopf 13 einschließlich mit dem vorteilhaft einstückig ausgebildeten Verbindungsstift 14 um einen bestimmten Winkelbetrag gedreht, vorzugsweise 90°, wodurch der Verbindungskopf in den Bereich der Hinterschneidung 11 geführt und von dieser unverlierbar gehalten ist.

Die Länge L des Verbindungskopfes 13 entspricht vorteilhaft etwa der Breite B der Profilnut 5, so daß nach dem Einsetzen des Verbindungskopfs in die Profilnut 5 eine Drehung um maximal 90° ermöglicht ist und der Verbindungskopf in dieser Position gehalten ist.

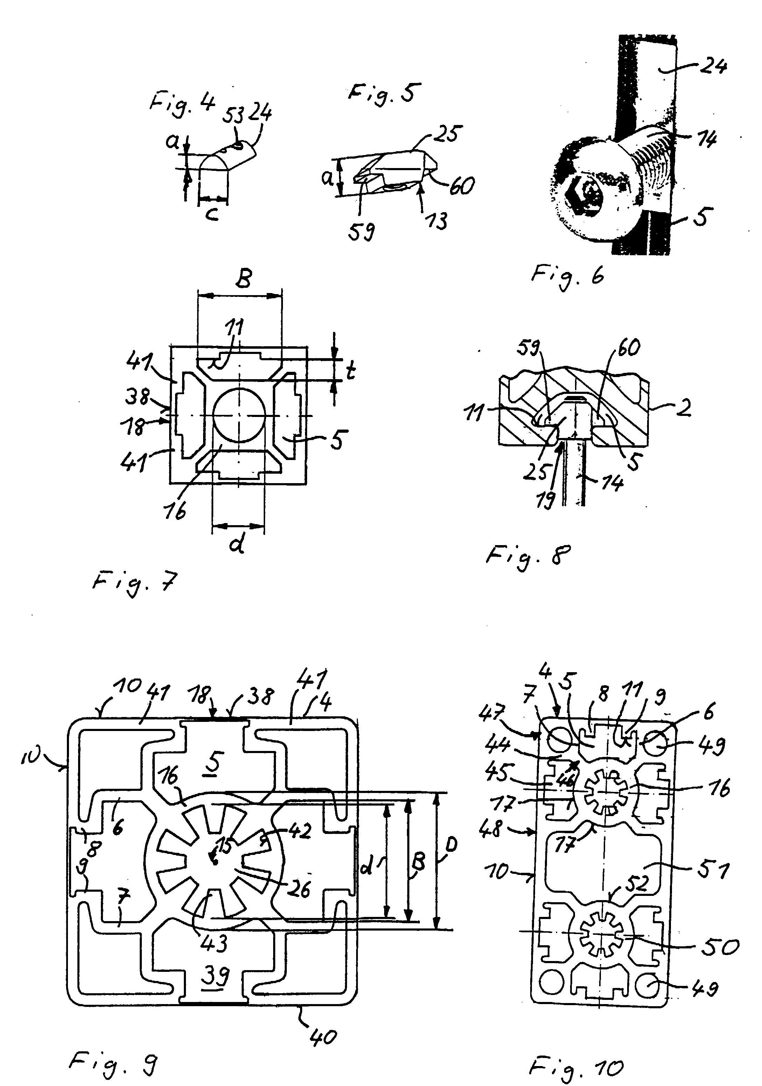

Verbindungskopf 13 und Verbindungsstift 14 können auch zweiteilig ausgebildet sein; in diesem Fall weist der Verbindungskopf 13 zweckmäßig die Form eines Nutensteins 24, 25 auf, der in die Profilnut 5 eingeknöpft wird, siehe Fig. 4 bis 6. Fig. 4 zeigt einen Nutenstein 24 mit teilkreisförmigem Querschnitt, der eine minimale Erstreckung a aufweist, die kleiner ist als die Durchbruchbreite b. Nach Fig. 6 wird der Nutenstein in verschwenkter Position durch den Durchbruch in die Profilnut 5 eingeschoben und in der Profilnut in seine Halteposition zurück verschwenkt, in der die ebene Seite des Nutensteins parallel zur Außenseite des Tragprofils angeordnet ist. Die Tiefe t der Profilnut 5 (Fig. 7) muß zumindest gleich der Erstreckung a des Nutensteins 24 sein, damit der Nutenstein vollständig von der Profilnut aufgenommen wird. Die Breite c des Nutensteins übersteigt die Durchbruchbreite b, wodurch der Nutenstein in seiner Halteposition von der Hinterschneidung 11 gehalten ist. In eine Bohrung 53 im Nutenstein 24 ist der Verbindungsstift 14 eindrehbar, an den ein Verbindungskopf 13 mit kreisförmigem Querschnitt aufgesetzt ist, der zum Halten eines stirnseitig angrenzenden Tragprofils genutzt werden kann.

Der in der Fig. 5 dargestellte Nutenstein 25 weist ebenfalls eine minimale Erstreckung a auf, längs derer der Nutenstein 25 durch den Durchbruch 19 in die Profilnut 5 einschiebbar ist. Der Nutenstein 25 weist seitliche Vorsprünge 59, 60 auf, die von der Hinterschneidung 11 gehalten sind, wodurch der Nutenstein 25 unverlierbar in der Profilnut festsitzt, siehe Fig. 8.

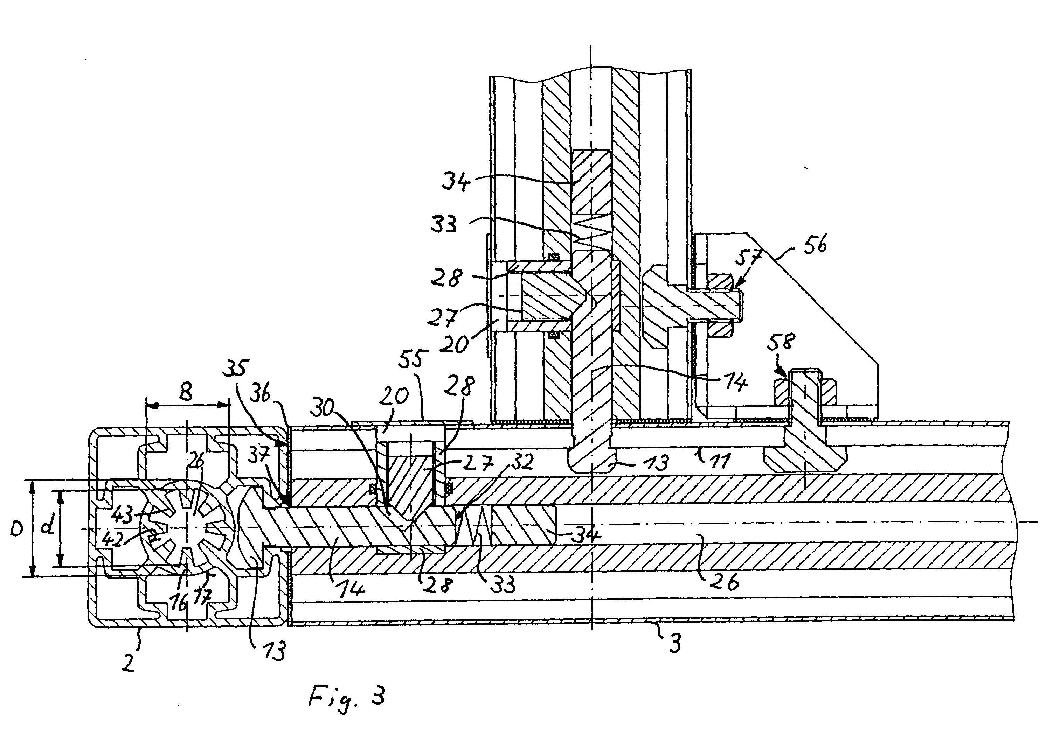

Die Profilverbindung 1 zur festen Anbindung eines stirnseitig angrenzenden Tragprofils 3 an die Außenseite 4 eines Tragprofils 2 ist im Detail den Fig. 2 und 3 zu entnehmen. Der Verbindungsstift 14 ist zweckmäßig im Stützkern 16 des stirnseitig angrenzenden Tragprofils 3 gehalten, welcher vorteilhaft einen kreisförmigen Querschnitt mit Durchmesser D aufweist, wobei der Durchmesser D größer ist als die Länge 1 des Durchbruchs 19. Der Durchbruch 19 ist daher vollständig von der Stirnseite des Stützkerns 16 verschlossen, so daß Schmutz und Keime auf keinen Fall in die Profilnut eindringen können, welche der Stirnseite des Tragprofils 3 zugewandt ist. Der Verbindungsstift 14 ist zweckmäßig in einem axial verlaufenden Hohlraum 26 mit vorzugsweise kreisförmigem Querschnitt im Stützkern 16 gehalten, wobei der Hohlraumdurchmesser d kleiner ist als die Länge 1 des Durchbruchs 19. Demzufolge liegt die Länge 1 des Durchbruchs in einem Bereich zwischen Durchmesser d des Hohlraums 26 und Durchmesser D des Stützkerns 16, wodurch sowohl eine ausreichende Dimensionierung des Durchbruchs zum Zwecke des Einbringens des Verbindungskopfes 13 gewährleistet als auch eine vollständige Umschließung der Durchbruchfläche vom Durchmesser D des Stützkerns sichergestellt ist.

Der Verbindungsstift 14 ist im Hohlraum 26 des Stützkerns 16 unverlierbar gehalten, indem in der Mantelfläche 29 des Verbindungsstifts eine etwa konusförmige Ausnehmung 30 eingebracht ist, in die zur axialen Sicherung das Schraubenende 31 einer Zentrierschraube 27 haltend eingreift. Die Zentrierschraube 27 ist von einer Haltehülse 28 gehalten, die durch den Durchbruch 20 bzw. die Ausnehmung geführt ist und bis in den inneren Hohlraum 26 einragt. Die Haltehülse 28 weist eine Bohrung 54 auf, durch die der Verbindungsstift 14 geführt ist, wodurch auch die Haltehülse 28 in der Ausnehmung 20 unverlierbar gehalten ist. Zum axialen Sichern des Verbindungsstifts 14 wird die Zentrierschraube 27 in die Haltehülse 28 eingeschraubt, bis das Schraubenende 31 der Zentrierschraube in den Bereich der konusförmigen Ausnehmung 30 im Mantel des Verbindungsstifts 14 gelangt. Ein vollständiges Eindrehen der Zentrierschraube 27 bewirkt, daß der Verbindungsstift 14 axial unverrückbar im Hohlraum des Stützkerns 16 gehalten ist.

Um die Ausnehmung 30 des Verbindungsstifts 14 axial etwa an derjenigen Stelle festsetzen zu können, an der die Zentrierschraube 27 fixierend eingreift, kann anschließend an das freie Ende 32 des Verbindungsstifts 14 ein axial festklemmbarer Haltebolzen 34 in den Hohlraum 26 eingesetzt sein, wobei zwischen Haltebolzen 34 und Verbindungsstift 14 eine Feder 33 angeordnet ist. Wird das Verbindungselement 12, bestehend aus Kopf 13 und Stift 14, zum Herstellen der Profilverbindung zunächst mit dem Stift 14 in das stirnseitig angrenzende Tragprofil 3 eingesetzt, ist es axial von der Feder 33, welche sich am Haltebolzen 34 abstützt, in der richtigen Position gehalten und kann von der Zentrierschraube 27 vorläufig so weit fixiert werden, daß ein geringfügiges Bewegen des Stiftes 14 zwar noch ermöglicht ist, der Stift 14 aber nicht aus dem Stützkern 16 herausrutschen kann. Daraufhin kann der Kopf 13 in den Durchbruch 19 auf der Außenseite 4 des angrenzenden Tragprofils 2 eingesetzt werden und um 90° verdreht werden, damit der Kopf von der Hinterschneidung 11 der Profilnut 5 unverlierbar gehalten ist. In dieser Position wird die Zentrierschraube 27 vollständig eingedreht, woraufhin der Verbindungsstift 14 unverrückbar fixiert ist.

Wie aus Fig. 3 hervorgeht, liegt die Zentrierschraube 27 bei teileingeschraubter Position auf der dem Haltebolzen 34 zugewandten Seitenfläche der konusförmigen Aussparung 30 an, so daß ein weiteres Eindrehen der Schraube 27 in der Haltehülse 28 den Verbindungsstift 14 tiefer in den Hohlraum 26 hinein bewegt. Dadurch nähert sich auch der Verbindungskopf 13 der Stirnseite des stirnseitig angrenzenden Tragprofils 3 an und zieht das vom Verbindungskopf 13 gehaltene Tragprofil 2 fest abschließend an die Stirnseite heran. Die Stirnfläche 35 des stirnseitig angrenzenden Tragprofils 3 ist dabei im wesentlichen von einem Dichtelement 36 abgedeckt, welches Dichtelement 36 die Stirnseite nicht überragt. Das Dichtelement 36 liegt mit einem äußeren Rand auf der Stirnseite der Profilaußenwand auf und dichtet ab. Eine zentrale, dem Durchmesser des Verbindungsstiftes 14 angepaßte, zentrale Durchgriffsöffnung 37 hat einen inneren Rand, der auf der Stirnseite des Stützkerns 16 dichtend aufliegt. Durch den Einsatz des Dichtelements 36 ist eine staub- und keimfreie Abdichtung nicht nur der Verbindungsstelle gegeben, sondern auch ein stirnseitiger dichter Abschluß der ansonsten geschlossenen Profilnuten 5. Diese Art der Abdichtung wird höchsten hygienischen Anforderungen gerecht, sofern auch die Durchbrüche 19 von einer Dichtung abgedichtet sind, wie Figur 3 am Beispiel eines angeordneten Versteifungswinkels 56 zeigt.

In einer anderen Ausführung ist die Feder 33 zwischen Haltebolzen 34 und freiem Ende 32 des Stiftes 14 sowohl auf Zug als auch auf Torsion beanspruchbar; bei dieser Ausführung wird der Kopf 13 zunächst um 90° verdreht und ein Stück herausgezogen und durch den Durchbruch 19 geführt, woraufhin das Torsionsmoment sowie die Zugkraft der Feder 33 den Stift 14 in die Ausgangslage, die zugleich die Halteposition kennzeichnet, zurückverdreht und das Tragprofil 2 heranzieht. Der Durchbruch 20, durch den die Haltehülse 28 geführt ist, kann von einer Abdeckfolie bzw. -leiste 55 verschlossen sein, damit die im Bereich des Durchbruchs 20 geöffnete Profilnut vor Verschmutzung geschützt ist.

Zum Abstützen zweier angrenzender Tragprofile kann es angezeigt sein, einen Stützwinkel 56 einzusetzen, der durch Verbindungen 57, 58 mit beiden Tragprofilen verbunden ist, wobei die Verbindungen 57, 58 in vorbeschriebener Weise durch Durchbrüche in den Profilnuten gehalten sein können.

Das Verbindungselement 12 besteht vorteilhaft aus einem Material mit hohem Elastizitätsmodul, vorzugsweise Stahl, wohingegen das Tragprofil aus einem Material mit geringerem Elastizitätsmodul gefertigt sein kann, beispielsweise Aluminium.

Gemäß einer zweckmäßigen Weiterbildung der Erfindung ist vorgesehen, daß der Durchmesser d des Hohlraums 26 im Stützkern 16 kleiner ist als die Breite B der Profilnut 5, siehe beispielsweise Fig. 9. Bei einem derart ausgebildeten Tragprofil ist sicher gewährleistet, daß der Durchmesser d des Hohlraums 26 auch kleiner ist als die Längsseite des Verbindungskopfes 13 und daher auch kleiner oder gleich der Erstreckung 1 der Durchbruch-Längsseite ist. Ein derartiges Tragprofil ist daher besonders dazu geeignet, Verbindungen aufzunehmen, die in Durchbrüche der abgeschlossenen Abdeckung 18 einbringbar sind.

Bei allen gezeigten Ausführungsbeispielen liegt die Außenseite 38 der Abstützung 18 der Profilnut 5 in einer gemeinsamen Ebene mit dem Außenmantel 10 an der jeweiligen Außenseite des Tragprofils. Das Fehlen von Überhöhungen und Vertiefungen im Außenmantel des Tragprofils verhindert zuverlässig das Festsetzen von Keimen und Schmutzpartikeln.

Flexible Anwendbarkeit und Nutzen der Tragprofile werden dadurch erhöht, daß im Bereich jeder Außenseite des Tragprofils zumindest eine Profilnut eingebracht ist, wobei die Profilnuten 5, 39 gegenüberliegender Außenseiten 4, 40 spiegelsymmetrisch zur Tragprofil-Längsachse 15 angeordnet sind, siehe Fig. 9.

Die Abstützung 18 kann eine geringere Wandstärke aufweisen als die an die Abstützung angrenzenden Wandbereiche 41. Das Einbringen von Durchbrüchen wird hierdurch deutlich erleichtert, wohingegen das Widerstandsmoment des Tragprofils nur unwesentlich reduziert ist.

Der Durchmesser D des Stützkerns 16 ist vorteilhaft größer ausgebildet als die Profilnutbreite B, so daß die Durchbrüche, die nicht länger als die Profilnutbreite sind, vollständig von der Stirnfläche des Stützkerns im Verbindungsbereich abgedeckt sind.

Am Innenmantel 42 des Stützkerns 16 sind vorzugsweise radial nach innen gerichtete Zähne 43 angeordnet, die sich über die gesamte axiale Länge des Stützkerns erstrecken. Die Zähne 43 bilden einen radial durchbrochenen Hohlraum 26, in den der Verbindungsstift 14 einsetzbar ist.

Fig. 10 ist zu entnehmen, daß die einander zugewandten Schenkelenden 8, 9 einer Profilnut 5 radial nach innen abgebogen sind und nach innen gerichtete Vorsprünge bilden, die als Hinterschneidung 11 den in die Profilnut eingesetzten Verbindungskopf unverlierbar halten.

Die Profilschenkel 7, 44 benachbarter Profilnuten 5, 45 sind im der Mantelfläche 17 des Stützkerns naheliegenden Bereich 46 einteilig ausgebildet und schließen im Eckbereich 47 aneinanderstoßender Außenseiten 4, 48 einen axial verlaufenden Hohlraum 49 ein, der vorzugsweise kreisförmigen Querschnitt aufweist und nach außen vom Außenmantel 10 des Tragprofils begrenzt ist. Die Hohlräume 49 können in ähnlicher Weise wie der Hohlraum 26 des Stützkerns zum Einsetzen von Verbindungselementen verwendet werden.

Das Tragprofil nach Fig. 10 weist zwei parallel versetzte Stützkerne 16, 50 auf, deren Mantelflächen 17, 52 zusammen mit benachbarten Profilschenkeln einen Hohlraum 51 begrenzen. Ein mit zwei oder mehr Stützkernen ausgebildetes Tragprofil weist eine besonders hohe Stabilität auf und kann in Bereichen mit sehr hoher Belastung eingesetzt werden.

## Patentansprüche

1. Profilverbindung zwischen einem Tragprofil (2) und einem stirnseitig angrenzenden Tragprofil (3) zum Bau von Stützrahmen, Wandelementen, Regalen oder dgl., wobei die Tragprofile (2, 3) einen inneren, sich axial zur Tragprofillängsachse (15) erstreckenden Stützkern (16) und im Bereich jeder Außenseite (4, 40) eine axial verlaufende Profilnut (5, 39) aufweisen, die durch zwei axial verlaufende Profilschenkel (6, 7) begrenzt ist, welche zwischen der Mantelfläche (17) des Stützkerns (16) und dem Außenmantel (10) des Tragprofils (2, 3) angeordnet sind und deren offene Schenkelenden (8, 9) im Bereich des Außenmantels (10) des Tragprofils (2, 3) einander zugewandt sind und eine Hinterschneidung (11) bilden, in die ein aus einem Verbindungskopf (13, 24, 25) und einem Verbindungsstift (14) bestehendes Verbindungselement (12) einsetzbar ist, durch welches das stirnseitig angrenzende Tragprofil (3) gehalten ist, wobei die Profilnuten (5, 39) gegenüberliegender Außenseiten (4, 40) spiegelsymmetrisch zur Tragprofillängsachse (15) angeordnet sind,
dadurch gekennzeichnet, daß die einander zugewandten Schenkelenden (8, 9) aller Profilnuten (5, 39) über den größten Teil der Profilnutlänge durch eine kraftübertragende und die Profilnut (5, 39) verschließende Abstützung (18) miteinander verbunden sind, welche einteilig mit dem Tragprofil (2, 3) im Bereich des Außenmantels (10) ausgebildet ist und Durchbrüche (19, 20) zum Einsetzen des Verbindungselementes (12) aufweist, wobei der Verbindungskopf (13, 24, 25) in einen Durchbruch (19) des einen Tragprofils (2) eingreift und der Verbindungsstift (14) in den Stützkern (16) des anderen Tragprofils (3) einragt und durch dessen Durchbruch (20) festgelegt ist, wobei die minimale Erstreckung (b) der Durchbrüche (19, 20) geringer ist als die Breite (B) der Profilnut (5, 39) und zumindest gleich der minimalen Erstreckung (a, e) des Verbindungskopfes (13, 24, 25) ist.

2. Profilverbindung nach Anspruch 1,
dadurch gekennzeichnet, daß die Durchbrüche (19) Rechteckform aufweisen und die Durchbruch-Längsseiten vorzugsweise parallel zur Längsachse (21) der Profilnut (5) ausgerichtet sind, wobei insbesondere die Längsmittelachse (22) der Durchbrüche (19) in einer Längsmittelebene (23) der Profilnut (5) liegt.

3. Profilverbindung nach Anspruch 1 oder 2,
dadurch gekennzeichnet, daß der Verbindungskopf (13) eine rechteckige Querschnittsform aufweist und die Länge (1) der Durchbrüche (19) zumindest gleich der Erstreckung (L) der Verbindungskopf-Längsseite ist, wobei der Verbindungskopf (13) und der Verbindungsstift (14) vorzugsweise als einstückiges Bauteil ausgebildet sind.

4. Profilverbindung nach einem der Ansprüche 1 bis 3,
dadurch gekennzeichnet, daß der Verbindungskopf in Form eines Nutensteins (24, 25) in die Profilnut (5) einsetzbar ist und vorzugsweise die Profilnut (5) eine Tiefe (t) aufweist, die zumindest der minimalen Erstreckung (a) des Nutensteins (24, 25) entspricht und insbesondere die Profilnutbreite (B) geringfügig größer als die maximale Erstreckung (L) des Verbindungskopfes (13) ist.

5. Profilverbindung nach einem der Ansprüche 1 bis 4,
dadurch gekennzeichnet, daß der Stützkern (16) einen vorzugsweise zentral im Tragprofil (2, 3) liegenden kreisförmigen Querschnitt aufweist und der Durchmesser (D) des Stützkerns (16) bevorzugt größer ist als die Durchbruchlänge (1), wobei insbesondere der Stützkern (16) einen axial verlaufenden Hohlraum (26) mit vorzugsweise kreisförmigem Querschnitt umschließt, dessen Durchmesser (d) kleiner ist als die Durchbruchlänge (1).

6. Profilverbindung nach einem der Ansprüche 1 bis 5,
dadurch gekennzeichnet, daß der Verbindungsstift (14) im Stützkern (16) des stirnseitig angrenzenden Tragprofils (3) unverlierbar gehalten ist, wozu vorzugsweise in das stirnseitig angrenzende Tragprofil (3) winklig zur Tragprofil-Längsachse (15) den Verbindungsstift (14) unverrückbar festsetzende Zentrierschraube (27) einsetzbar ist, wobei die Zentrierschraube (27) insbesondere in eine Haltehülse (28) einsetzbar ist, in die zumindest teilweise der Verbindungsstift (14) einragt und vorzugsweise in die Mantelfläche (29) des Verbindungsstifts (14) eine etwa konusförmige Ausnehmung (30) eingebracht ist, in die zur axialen Sicherung das Schraubenende (31) der Zentrierschraube (27) haltend eingreift.

7. Profilverbindung nach Anspruch 6,
dadurch gekennzeichnet, daß das freie Ende (32) des Verbindungsstifts (14) über eine Feder (33) an einem axial festklemmbaren Haltebolzen (34) abgestützt ist.

8. Profilverbindung nach einem der Ansprüche 1 bis 7,
dadurch gekennzeichnet, daß zumindest die Stirnfläche (35) des stirnseitig angrenzenden Tragprofils (3) im wesentlichen ganzflächig von einem Dichtelement (36) abgedeckt ist, das eine dem Durchmesser des Verbindungsstiftes (14) entsprechende Durchgriffsöffnung (37) aufweist, deren Rand vorzugsweise auf dem Stützkern (16) dichtend aufliegt.

9. Tragprofil für eine Profilverbindung zum Bau von Stützrahmen, Wandelementen, Regalen oder dgl., nach einem der Ansprüche 1 bis 8 mit einer im Bereich jeder Außenseite (4, 40) sich koaxial zur Tragprofil-Längsachse (15) erstreckenden Profilnut (5), die durch zwei axial verlaufende Profilschenkel (6, 7) begrenzt ist, deren offene Schenkelenden (8, 9) im Bereich des Außenmantels (10) des Tragprofils (2, 3) einander zugewandt sind und eine Hinterschneidung (11) bilden, wobei
das Tragprofil (2, 3) einen inneren, sich axial erstreckenden Stützkern (16) aufweist, zwischen dessen Mantelfläche (17) und dem Außenmantel (10) des Tragprofils (2, 3) die die Profilnut (5) begrenzenden Profilschenkel (6, 7) angeordnet sind, der Stützkern (16) einen axial verlaufenden Hohlraum (26) aufweist, dessen Durchmesser (d) kleiner ist als die Breite (B) der Profilnut (5), und die Profilnuten (5, 39) gegenüberliegender Außenseiten (4, 40) spiegelsymmetrisch zur Tragprofil-Längsachse (15) angeordnet sind, dadurch gekennzeichnet, daß die einander zugewandte Schenkelenden der Profilschenkel (8, 9) durch eine kraftübertragende Abstützung (18) über die gesamte axiale Profilnutlänge miteinander verbunden sind, wobei die Abstützung (18) einteilig mit dem Tragprofil (2, 3) im Bereich des Außenmantels (10) ausgebildet ist, und wobei vorzugsweise die Außenseite (38) der Abstützung (18) der Profilnut (5) und der Außenmantel (10) des Tragprofils (2, 3) in einer Ebene liegen.

10. Tragprofil nach Anspruch 9,
dadurch gekennzeichnet, daß die Abstützung (18) eine geringere Wandstärke aufweist als die an die Abstützung (18) angrenzenden Wandbereiche (41) und vorzugsweise der Durchmesser (D) des Stützkerns (16) größer ist als die Profilnutbreite (B), wobei insbesondere am Innenmantel (42) des Stützkerns (16) axial verlaufende, radial nach innen gerichtete Längsrippen (43) angeordnet sind, wobei die einander zugewandten Schenkelenden (8, 9) radial nach innen abgewinkelt sind.

11. Tragprofil nach Anspruch 9 oder 10,
dadurch gekennzeichnet, daß die Profilschenkel (7, 44) benachbarter Profilnuten (5, 45) einteilig ausgebildet sind und an die Mantelfläche (17) des Stützkerns (16) anschließen, wobei vorzugsweise im Eckbereich (47) aneinanderstoßender Außenseiten (4, 48) ein axial verlaufender Hohlraum (49) mit insbesondere kreisförmigem Querschnitt ausgebildet ist, der nach außen vom Außenmantel (10) des Tragprofils (2, 3) und nach innen von benachbarten Profilschenkeln (7, 44) begrenzt ist, wobei das Tragprofil (2, 3) zumindest zwei parallel versetzte Stützkerne (16, 50) aufweist und zwischen zwei Stützkernen (16, 50) vorzugsweise ein Hohlraum (51) gebildet ist, der von den Mantelflächen (17, 52) der Stützkerne (16, 50) und benachbarten Profilschenkeln begrenzt ist.

## Claims

1. Profile connection between a support profile (2) and a support profile (3) adjoining on the face side for the construction of support frames, wall elements, shelves and similar, wherein the support profiles (2, 3) have an inner support core (16) extending axially to the longitudinal axis (15) of the support profile and in the region of each outer side (4, 40) have an axially extending profile groove (5, 39), which is defined by two axially extending profile legs (6, 7), which are arranged between the shell surface (17) of the support core (16) and the outer shell (10) of the support profile (2, 3), and the open leg ends (8, 9) of which face one another in the region of the outer shell (10) of the support profile (2, 3) and form an undercut (11), into which a connecting element (12) comprising a connection head (13, 24, 25) and a connection pin (14) may be inserted, by means of said connecting element the support profile (3) adjoining on the face side is held, the profile grooves (5, 39) of opposite outer sides (4, 40) are arranged mirror-symmetrically to the longitudinal axis (15) of the support profile, characterised in that the facing leg ends (8, 9) of all the profile grooves (5, 39) are connected to one another over the largest portion of the profile groove length by a force-transferring support means (18) closing the profile groove (5, 39), said support means being constructed in one piece with the support profile (2, 3) in the region of the outer shell (10) and having openings (19, 20) for the insertion of the connecting element (12), the connection head (13, 24, 25) thereby engaging in one opening (19) of one support profile (2) and the connection pin (14) protruding into the support core (16) of the other support profile (3) and being fixed by its opening (20), whereby the minimum extension (b) of the openings (19, 20) is less than the width (B) of the profile groove (5, 39) and at least equal to the minimum extension (a, e) of the connection head (13, 24, 25).

2. Profile connection according to Claim 1, characterised in that the openings (19) are rectangular and the longitudinal sides of the openings are preferably oriented parallel to the longitudinal axis (21) of the profile groove (5), whereby the longitudinal central axis (22) of the openings (19) in particular lies in a longitudinal central plane (23) of the profile groove (5).

3. Profile connection according to Claim 1 or 2, characterised in that the connection head (13) has a rectangular cross-section and the length (1) of the openings (19) is at least equal to the extension (L) of the longitudinal side of the connection head, whereby the connection head (13) and the connection pin (14) are preferably constructed as a component in one piece.

4. Profile connection according to one of Claims 1 to 3, characterised in that the connection head in the form of a tenon block (24, 25) may be inserted into the profile groove (5) and preferably the profile groove (5) has a depth (t), which corresponds at least to the minimum extension (a) of the tenon block (24, 25) and in particular the profile groove width (B) is slightly larger than the maximum extension (L) of the connection head (13).

5. Profile connection according to one of Claims 1 to 4, characterised in that the support core (16) has a circular cross-section preferably lying centrally in the support profile (2, 3) and the diameter (D) of the support core (16) is preferably larger than the opening length (1), whereby in particular the support core (16) encloses an axially extending cavity (26) with preferably circular cross-section, the diameter (d) of which is smaller than the opening length (1).

6. Profile connection according to one of Claims 1 to 5, characterised in that the connection pin (14) is undetachably held in the support core (16) of the support profile (3) adjoining on the face side, for which preferably a centring screw (27) immovably fixing the connection pin (14) may be inserted into the support profile (3) adjoining the face side on an angle to the longitudinal axis (15) of the support profile, whereby the centring screw (27) may be inserted into a retaining sleeve (28) in particular, into which the connection pin (14) at least partially protrudes, and an approximately cone-shaped recess (30) is preferably incorporated into the shell surface (29) of the connection pin (14), into said recess the screw end (31) the centring screw (27) grips for axial locking.

7. Profile connection according to Claim 6, characterised in that the free end (32) of the connection pin (14) is supported via a spring (33) on a retaining bolt (34) which may be axially clamped.

8. Profile connection according to one of Claims 1 to 7, characterised in that at least the face (35) of the support profile (3) adjoining on the face side is essentially covered over its entire surface by a sealing element (36), which has an access opening (37) corresponding to the diameter of the connection pin (14), the edge of said opening preferably lying on the support core (16) to form a seal.

9. Support profile for a profile connection for the construction of support frames, wall elements, shelves and similar, according to one of Claims 1 to 8 with a profile groove (5), which extends coaxially to the longitudinal axis (15) of the support profile in the region of each outer side (4, 40) and is defined by two axially extending profile legs (6, 7), the open leg ends (8, 9) of which face one another in the region of the outer shell (10) of the support profile (2, 3) and form an undercut (11), whereby the support profile (2, 3) has an axially extending inner support core (16), between the shell surface (17) of which and the outer shell (10) of the support profile (2, 3) the profile legs (6, 7) defining the profile groove (5) are arranged, the support core (16) having an axially extending cavity (26), the diameter (d) of which is smaller than the width (B) of the profile groove (5), and the profile grooves (5, 39) of opposing outer sides (4, 40) are arranged mirror-symmetrically to the longitudinal axis (15) of the support profile, characterised in that the facing leg ends of the profile legs (8, 9) are connected to one another over the entire axial length of the profile groove, whereby the support means (18) is constructed in one piece with the support profile (2, 3) in the region of the outer shell (10), and whereby the outer side (38) of the support means (18) of the profile groove (5) and the outer shell (10) of the support profile (2, 3) preferably lie in one plane.

10. Support profile according to Claim 9, characterised in that the support means (18) has a smaller wall thickness than the wall regions (41) adjoining the support means (18) and the diameter (D) of the support core (16) is preferably larger than the width (B) of the profile groove, whereby axially extending longitudinal ribs (43) directed radially inwards are arranged in particular on the inside shell (42) of the support core (16), whereby the facing leg ends (8, 9) are angled radially inwards.

11. Support profile according to Claim 9 or 10, characterised in that the profile legs (7, 44) of adjacent profile grooves (5, 45) are constructed in one piece and connect to the shell surface (17) of the support core (16), whereby an axially extending cavity (49) with a circular cross-section in particular is preferably constructed in the corner region (47) of abutting outer sides (4, 48), said cavity being defined outwardly by the outer shell (10) of the support profile (2, 3) and inwardly by adjacent profile legs (7, 44), whereby the support profile (2, 3) has at least two support cores (16, 50) staggered parallel and a cavity (51) defined by the shell surfaces (17, 52) of the support cores (16, 50) and adjacent profile legs is preferably formed between two support cores (16, 50).

## Revendications

1. Jonction entre un profilé porteur (2) et un profilé porteur contigu frontalement (3) pour la construction de cadres porteurs, d'éléments de mur, d'étagères ou de dispositifs semblables, les profilés porteurs (2, 3) présentant un noyau support intérieur (16) s'étendant axialement par rapport à l'axe longitudinal (15) du profilé porteur et, dans la zone de chaque face extérieure (4, 40), une rainure profilée s'étendant axialement (5, 39) qui est limitée par deux ailes profilées s'étendant axialement (6, 7) qui sont placées entre la surface latérale (17) du noyau support (16) et l'enveloppe extérieure (10) du profilé porteur (2, 3) et dont les extrémités ouvertes (8, 9), dans la zone de l'enveloppe extérieure (10) du profilé porteur (2, 3), sont dirigées l'une vers l'autre et forment une contre-dépouille (11) dans laquelle peut être engagé un élément d'assemblage (12) qui est constitué d'une tête d'assemblage (13, 24, 25) et d'une tige d'assemblage (14) et tient le profilé porteur contigu frontalement (3), les rainures profilées (5, 39) des faces extérieures (4, 40) opposées étant placées symétriquement par rapport à l'axe longitudinal (15) du profilé porteur,
caractérisée par le fait que les extrémités dirigées l'une vers l'autre (8, 9) des ailes de toutes les rainures profilées (5, 39) sont reliées sur la majeure partie de la longueur de la rainure profilée par un support transmetteur de force (18) qui ferme la rainure profilée (5, 39), fait corps avec le profilé porteur (2, 3) dans la zone de son enveloppe extérieure (10) et présente des trous (19, 20) pour l'engagement de l'élément d'assemblage (12), la tête d'assemblage (13, 24, 25) s'engageant dans un trou (19) d'un profilé porteur (2) et la tige d'assemblage (14) entrant dans le noyau support (15) de l'autre profilé porteur (3) et étant fixée par le trou (20) de celui-ci, l'étendue minimale (b) des trous (19, 20) étant inférieure à la largeur (B) de la rainure profilée (5, 39) et au moins égale à l'étendue minimale (a, e) de la tête d'assemblage (13, 24, 25).

2. Jonction de profilés selon la revendication 1, caractérisée par le fait que les trous (19) sont rectangulaires et leurs côtés longitudinaux sont de préférence parallèles à l'axe longitudinal (21) de la rainure profilée (5), et en particulier, l'axe longitudinal (22) des trous (19) est situé dans un plan médian longitudinal (23) de la rainure profilée (5).

3. Jonction de profilés selon l'une des revendications 1 et 2, caractérisée par le fait que la tête d'assemblage (13) est de section rectangulaire et la longueur (1) des trous (19) est au moins égale à l'étendue (L) du côté longitudinal de la tête d'assemblage, la tête d'assemblage (13) et la tige d'assemblage (14) formant de préférence un élément d'une seule pièce.

4. Jonction de profilés selon l'une des revendications 1 à 3, caractérisée par le fait que le tête d'assemblage peut être engagée dans la rainure profilée (5) sous la forme d'un coulisseau (24, 25), et de préférence, la rainure profilée (5) a une profondeur (t) qui correspond au moins à l'étendue minimale (a) du coulisseau (24, 25), et en particulier, la largeur (B) de la rainure profilée est légèrement supérieure à l'étendue maximale (L) de la tête d'assemblage (13).

5. Jonction de profilés selon l'une des revendications 1 à 4, caractérisée par le fait que le noyau support (16) a une section circulaire située de préférence au centre du profilé porteur (2, 3) et le diamètre (D) du noyau support (16) est de préférence supérieur à la longueur (1) du trou, et en particulier, le noyau support (16) renferme une cavité s'étendant axialement (26) de section de préférence circulaire dont le diamètre (d) est inférieur à la longueur (1) du trou.

6. Jonction de profilés selon l'une des revendications 1 à 5, caractérisée par le fait que la tige d'assemblage (14) est tenue de manière imperdable dans le noyau support (16) du profilé porteur contigu frontalement (3), et pour cela, de préférence, dans ce profilé (3) peut être engagée angulairement par rapport à l'axe longitudinal (15) de celui-ci une vis de centrage (27) qui immobilise la tige d'assemblage (14), cette vis de centrage (27) pouvant être engagée en particulier dans une douille de maintien (28) dans laquelle la tige d'assemblage (14) entre au moins partiellement, et de préférence, dans la surface latérale (29) de la tige d'assemblage (14) était fait un évidement à peu près conique (30) dans lequel s'engage aux fins d'arrêt axial l'extrémité (31) de la vis de centrage (27).

7. Jonction de profilés selon la revendication 6, caractérisée par le fait que l'extrémité libre (32) de la tige d'assemblage (14) s'appuie par l'intermédiaire d'un ressort (33) sur une cheville de retenue pouvant être bloquée axialement (34).

8. Jonction de profilés selon l'une des revendications 1 à 7, caractérisée par le fait qu'au moins la face frontale (35) du profilé porteur contigu frontalement (3) est couverte pratiquement entièrement par un élément d'étanchéité (36) qui présente une ouverture de passage (37) qui correspond au diamètre de la tige d'assemblage (14) et dont le bord, de préférence, s'appuie de manière étanche sur le noyau support (16).

9. Profilé porteur pour une jonction de profilés pour la construction de cadres porteurs, d'éléments de mur, d'étagères ou de dispositifs semblables selon l'une des revendications 1 à 8, comportant une rainure profilée (5) s'étendant dans la zone de chaque face extérieure (4, 40) dans la direction de l'axe longitudinal (15) du profilé porteur et limitée par deux ailes profilées s'étendant axialement (6, 7) dont les extrémités ouvertes (8, 9), dans la zone de l'enveloppe extérieure (10) du profilé porteur (2, 3), sont dirigées l'une vers l'autre et forment une contre-dépouille (11), le profilé porteur (2, 3) présentant un noyau support intérieur s'étendant axialement (16) entre la surface latérale (17) duquel et l'enveloppe extérieure (10) du profilé porteur (2, 3) sont placées les ailes profilées (6, 7) qui limitent la rainure profilée (5), le noyau support (16) présentant une cavité s'étendant axialement (26) dont le diamètre (d) est inférieur à la largeur (B) de la rainure profilée (5), et les rainures profilées (5, 39) des faces extérieures (4, 40) opposées étant placées symétriquement par rapport à l'axe longitudinal (15) du profilé porteur, caractérisé par le fait que les extrémités dirigées l'une vers l'autre (8, 9) des ailes sont reliées par un support transmetteur de force (18) sur toute la longueur axiale de la rainure profilée, ce support (18) étant fait dans la zone de l'enveloppe extérieure (10) du profilé support (2, 3) et faisant corps avec celui-ci, et de préférence, la face extérieure (38) du support (18) de la rainure profilée (5) et l'enveloppe extérieure (10) du profilé porteur (2, 3) étant dans le même plan.

10. Profilé porteur selon la revendication 9, caractérisé par le fait que le support (18) a une plus petite épaisseur de paroi que les parties de paroi (41) contiguës à celui-ci, et de préférence, le diamètre (D) du noyau support (16) est supérieur à la largeur (B) de la rainure profilée, en particulier sur l'enveloppe intérieure (42) du noyau support (16) étant faites des nervures longitudinales (43) s'étendant axialement et dirigées radialement vers l'intérieur, les extrémités dirigées l'une vers l'autre (8, 9) des ailes profilées étant rabattues radialement vers l'intérieur.

11. Profilé porteur selon l'une des revendications 9 et 10, caractérisé par le fait que les ailes profilées (7, 44) des rainures profilées (5, 45) voisines forment une seule pièce et se joignent à la surface latérale (17) du noyau support (16), de préférence, dans la zone de coin (47) des faces extérieures adjacentes (4, 48) étant faite une cavité s'étendant axialement (49) de section en particulier circulaire qui est limitée vers l'extérieur par l'enveloppe extérieure (10) du profilé porteur (2, 3) et vers l'intérieur par des ailes profilées voisines (7, 44), le profilé porteur (2, 3) présentant au moins deux noyaux supports parallèles (16, 50), et entre deux noyaux supports (16, 50) étant de préférence formée une cavité (51) qui est limitée par les surfaces latérales (17, 52) des noyaux supports (16, 50) et par des ailes profilées voisines.
